# EUROPEAN PATENT APPLICATION

(11) **EP 2 148 487 A1**
(43) Date of publication of application: **27.01.2010**
(21) Application number: 08290712.2
(22) Date of filing: 21.07.2008
(51) Int. Cl.: H04L 29/06, H04L 9/08

(54) **Method to secure communication of a stream through a network**

(71) Applicant: Alcatel Lucent, 75008 Paris (FR)
(72) Inventor: Conte, Alberto, 94230 Cachan (FR); de Juan Huarte, Federico, 75014 Paris (FR)
(74) Representative: Sayettat, Julien Christian

(57) **Abstract**

The invention concerns a method to secure the communication of a stream (4) between a distant service provider (3) and a user terminal (1) through a network (2), wherein:
- an end-to-end security association between said user terminal and said distant service provider is implemented by a key material (5),
- specific key material (8) from said security association is derived by the user terminal (1) and delivered to the network (2), which enables a security association between said network and said distant service provider

## Description

The invention relates to a method to secure the communication of a stream between a distant service provider and a user terminal through a network.

A network triggers different types of actions based on the status of a user terminal and on the type of stream received from a distant service provider or application. For example, the network triggers an active mode procedure when the user terminal is a mobile phone in idle mode which receives a phone call coming from another user terminal.

Currently, the problem is to guarantee the authenticity of a stream sent between a distant service provider and a user terminal through a network.

An authentication procedure is the act of confirming the identity or the origin of an entity or a person, to allow access for this entity to a resource such as a system, a network or an application. The authentication can therefore confirm the entity in question as authentic.

Indeed, without any authentication or correct validation, the user terminal can be unduly accessed and its disk operating system (DoS) might suffer from attacks. Moreover, it is necessary to provide quality of service for terminal users.

According to the well known state, there exists access security enabling to protect the interface between the user terminal and the network. However, such an access security, typically used in wireless technology, specifically exists for a given user terminal with a given network. Thus, it does not take into account the distant service provider communicating the stream.

According to the well known state, there also exists a solution to provide security for end-to-end communication. Such a solution is notably provided by IPSec but it can also be implemented by an application security or a system comprising one distant service provider for several user terminals. However, that end-to-end security is implemented without any intervention of the network.

It is an object of the present invention to secure the communication of a stream between a distant service provider and a user terminal through a network.

Specifically, the invention proposes a method for an access network to authenticate a stream coming from a distant service provider and addressed to a given terminal, whatever the network and the distant service provider.

For that purpose and according to a first aspect, the invention relates to a method to secure the communication of a stream between a distant service provider and a user terminal through a network, wherein:
- an end-to-end security association between said user terminal and said distant service provider is implemented by a key material,
- specific key material from said security association is derived by the terminal and delivered to the network, which enables a security association between said network and said distant service provider.

The invention will be best understood from the following description when read in conjunction with the accompanying drawing.

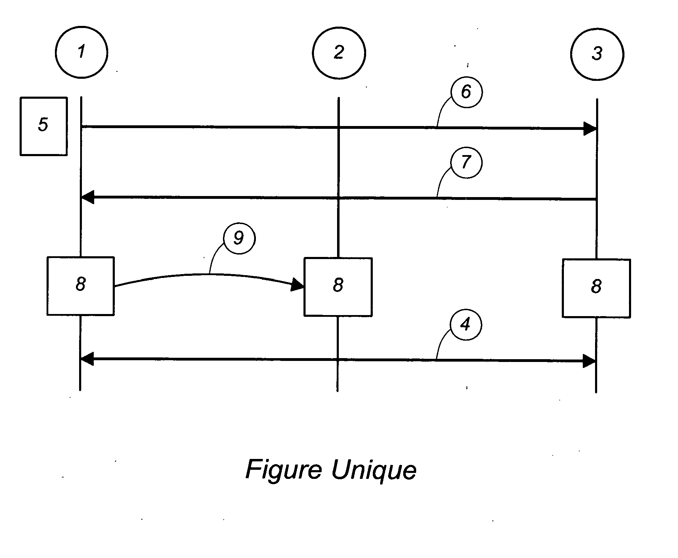

Figure 1 represents a diagram illustrating one embodiment of secured communication of a stream between a user terminal, a network and a distant service provider, according to the invention.

First of all, a user terminal 1 receives and sends information or streams or traffic 4 through a network 2 to a distant service provider, an application or another terminal 3.

In the following embodiment, description is made of a stream 4 communicated between a distant service provider 3 and a user terminal 1. For example, the stream 4 could concerns a voice call, a message (SMS) or an IP stream.

Generally, if a web page is launched on the user terminal, like a mobile phone, it launches secured connection to the network by means of a key material, regardless of the distant service provider. In another case, it tries to directly launch secured end-to-end connection with the distant service provider by means of a key material without any security intervention by the network.

The invention proposes a method to secure the communication of a stream 4 by creating security association between a distant service provider 3, a network 2 and a user terminal 1.

According to one embodiment, the user terminal 1 negotiates with the distant service provider 3 a common key material 5 in order to implement an end-to-end security association.

In particular, the key material 5 is a security mechanism that protects against piracy and improves the authentication between a terminal, a network and a distant service provider, for instance.

For example, when the user terminal 1 wishes to launch communication with the distant service provider 3 through the network 2, said user terminal negotiates a key material 5 with said distant service provider.

Specifically, the user terminal 1 launches a request for authentication 6 by means of the key material 5 so that the distant service provider authenticates said user terminal.

For instance, the key material 5 implementing the end-to-end security association between the distant service provider 3 and the user terminal 1 is associated to the stream 4 or to the request 6.

In case of positive authentication, the distant service provider 3 communicates its acceptance 7 to the user terminal 1.

The user terminal 1 then delivered 9 to the network 2 with a specific key material 8 which is derived from the existing key material 5. The specific key material 8 enables a security association between said network and said distant service provider for allowing the network 2 to authenticate traffic coming from the distant service provider. For example, the specific key material 8 is associated to the stream 4.

The distant service provider 3 also derives on its own the specific key material 8. Thus, the stream 4 is securely communicated through the network 2 between the distant service provider 3 and the user terminal 1.

The key materials 5 and 8 are particular as regards the user terminal. These particular keys 5, 8 can change for every request of authentication.

The key materials 5 and 8 can be automatically generated and eliminated by the user terminal 1.

The user terminal 1 provides the network with a traffic flow template associated to the stream coming from the distant service provider 3 that can be aurtheticated with the specific key material 8, said traffic flow template being delivered along with the specific key material 8 to the network 2.

A traffic flow template is a succession of filters that allow to identify uniquely a given stream sent by a distant service provider.

Moreover, the user terminal 1 can also provide the network 2 with a policy information realted to the stream coming from the distant service provider 3, said policy information being provided along with the specific key material 8 to the network 2.

This policy information can be a level of priority of the stream or an implementation of resources or nodes in order to increase the quality of service, such as stream shaping, admission control or congestion management.

In this embodiment, when the network 2 receives a stream 4, it:
- uses the traffic flow template to identify it;
- authenticates it according to the specific key material 8;
- performs action specified by the optional policy information.

Thus, the goal of the traffic flow template which is delivered by the user terminal 1 to the network 2 is to help the network to associtate the specific key material to the stream 4.

Moreover, the method enables the network to validate the authenticity of a stream by taking appropriate measures to authorize the communication of said stream from a distant service provider to a user terminal.

According to another advantage of the invention, the method can be used to guarantee the quality of service of a distant service provider or application or service thanks to complete authentication through all of the steps of the communication.

According to another aspect of the invention, the method can be implemented, and enable added value services, even if it is provided by a third party or by a peer-to-peer application.

## Claims

1. Method to secure the communication of a stream (4) between a distant service provider (3) and a user terminal (1) through a network (2), wherein:
- an end-to-end security association between said user terminal and said distant service provider is implemented by a key material (5),
- specific key material (8) from said security association is derived by the terminal (1) and delivered to the network (2), which enables a security association between said network and said distant service provider.

2. Method according to claim 1, wherein the specific key material (8) is delivered to the network (2) by the user terminal (1) and associated to the stream (4), therby allowing it to be authenticated.

3. Method according to any claims 1 or 2, wherein the specific key material (8) is derived from the key material (5) implementing the end-to-end security association between the distant service provider (3) and the user terminal (1).

4. Method according to any claim 1 to 3, wherein the key material (5) is negotiated between the user terminal (1) and the distant service provider (3) as a request (6) for authentication in order to have the end-to-end security association.

5. Method according to claims 1 to 4 wherein the key materials (5, 8) are automatically generated and eliminated.

6. Method according to claim 1 to 5, wherein the key materials (5, 8) are particular as regards the user terminal (1).

7. Method according to claim 4 to 6, wherein the key materials (5, 8) change at every request of authentication.

8. Method according to any claims 1 to 7, wherein the user terminal (1) delivers a traffic flow template along with the specific key material (8) to the network (2).

9. Method according to any claims 1 to 8, wherein the user terminal (1) delivers a policy information along with the specific key material (8) to the network (2).
